# FASCICULE DE BREVET EUROPEEN

(11) **EP 1 453 119 B1**
(45) Date de publication et mention de la délivrance du brevet: **14.06.2006**
(21) Numéro de dépôt: 03292850.9
(22) Date de dépôt: 17.11.2003
(51) Int. Cl.: H01M 2/02, H01M 2/30

(54) **Générateur électrochimique à connecteur monobloc**
Elektrochemischer Generator mit Monoblock-Konnektor
Electrochemical generator with monobloc connector

(30) Priorité: 21.11.2002 FR 0214570
(43) Date de publication de la demande: 01.09.2004
(73) Titulaire: Saft Finance S.à.r.l., 1471 Luxembourg (LU)
(72) Inventeur: Caillon, Georges, 33520 Bruges (FR); Lenhof, Céline, Résidence Le Laurence, 33110 le Bouscat (FR); Redois, Mélanie, 33320 Eysines (FR)
(74) Mandataire: Pochart, François

(56) Documents cités:
- EP-A- 0 834 934
- US-A- 5 580 678
- US-A- 6 080 508
- US-B1- 6 387 566
- US-B1- 6 387 567
- PATENT ABSTRACTS OF JAPAN vol. 1998, no. 03, 27 février 1998 (1998-02-27) & JP 09 288997 A (SUMITOMO ELECTRIC IND LTD), 4 novembre 1997 (1997-11-04)
- PATENT ABSTRACTS OF JAPAN vol. 2000, no. 21, 3 août 2001 (2001-08-03) & JP 2001 102016 A (SUMITOMO ELECTRIC IND LTD), 13 avril 2001 (2001-04-13)
- PATENT ABSTRACTS OF JAPAN vol. 010, no. 317 (E-449), 28 octobre 1986 (1986-10-28) & JP 61 126769 A (TOSHIBA BATTERY CO LTD), 14 juin 1986 (1986-06-14)
- PATENT ABSTRACTS OF JAPAN vol. 010, no. 175 (E-413), 20 juin 1986 (1986-06-20) & JP 61 024144 A (TOSHIBA DENCHI KK), 1 février 1986 (1986-02-01)
- PATENT ABSTRACTS OF JAPAN vol. 011, no. 312 (E-548), 12 octobre 1987 (1987-10-12) & JP 62 105361 A (TOSHIBA CORP), 15 mai 1987 (1987-05-15)

## Description

L'invention concerne le domaine des générateurs ou éléments électrochimiques utilisés pour l'alimentation de composants et/ou circuits électroniques.

De nombreux composants et/ou circuits électroniques ont besoin d'une source de puissance pour pouvoir assurer l'une au moins des fonctions pour lesquelles ils ont été conçus. Afin de permettre leur utilisation dans des équipements autonomes de petites dimensions, tels que certaines cartes à puce (ou « smart cards »), l'homme de l'art a développé des sources de puissance de très petites dimensions. Il a ainsi été proposé des générateurs électrochimiques (ou batteries) extra-plat(e)s, typiquement de l'ordre de 0,5 mm d'épaisseur pour des longueur et largeur de l'ordre de quelques dizaines de mm.

De tels générateurs comprennent généralement une partie principale dans laquelle sont logées à étanchéité une électrode négative et une électrode positive, sensiblement parallèles entre-elles, séparées l'une de l'autre par un électrolyte non-aqueux. Ces électrodes sont respectivement raccordées à des bornes de connexion négative et positive distantes, faisant saillie hors de la partie principale soit sur un même côté comme c'est le cas dans le document brevet EP-0 852 404, soit sur des côtés opposés comme c'est le cas du produit commercialisé sous la marque déposée "LITE*STAR".

Cette séparation physique des bornes de connexion positive et négative permet certes de limiter les risques de court-circuit, mais elle présente les inconvénients suivants :
(1) elle complexifie le procédé de fabrication,
(2) elle impose des contraintes d'alignement drastiques,
(3) elle rend vulnérable chaque borne de connexion,
(4) elle augmente l'encombrement de la batterie, et
(5) elle nuit à la qualité de l'étanchéité.

De plus, certains de ces inconvénients sont renforcés lorsque la batterie doit être flexible, comme c'est notamment le cas de celles qui équipent les cartes à puce.

L'invention a donc pour but de remédier à tout ou partie des inconvénients précités.

Elle propose à cet effet un générateur électrochimique comprenant, d'une part, une électrode négative et une électrode positive comportant chacune un collecteur de courant recouvert d'un matériau actif et muni d'un prolongement définissant une borne de connexion, et d'autre part, des moyens d'emballage logeant à étanchéité les électrodes. Selon l'invention les bornes de connexion sont placées de part et d'autre d'une couche d'isolation électrique et définissent avec celle-ci une patte de connexion monobloc, qui traverse le moyen d'emballage de manière à saillir au moins en partie vers l'extérieur.

Les électrodes comportent chacune un collecteur de courant, comprenant une première partie définissant une borne de connexion et prolongée par une seconde partie munie d'un matériau actif, les bornes de connexion étant placées de part et d'autre d'une couche d'isolation électrique pour constituer une patte de connexion monobloc. De la sorte, les deux bornes de connexion sont montées sur un unique support tout en demeurant parfaitement isolées électriquement, et leur solidité est largement renforcée. De plus cela permet de réduire sensiblement l'encombrement du générateur électrochimique, tout en améliorant son étanchéité. En outre, cela permet de simplifier le procédé de fabrication du générateur électrochimique et ses contraintes d'alignement. Enfin, cela permet de faciliter les opérations de raccordement du générateur électrochimique au(x) composant(s) et/ou circuit(s) électroniques(s) qu'il doit alimenter.

Préférentiellement, dans le but de renforcer l'isolation des bornes de connexion on interpose une couche auxiliaire d'isolation entre lesdits moyens d'emballage et la patte de connexion. Une telle couche auxiliaire peut être par exemple réalisée dans un matériau constitué d'au moins un polymère choisi parmi un polymère acrylique ou maléique et une polyoléfine telle que notamment un homopolymère de l'éthylène ou du propylène, un copolymère d'éthylène et de propylène ou un mélange de ceux-ci.

Par ailleurs, la couche d'isolation électrique peut être éventuellement constituée de deux sous-couches et elle est préférentiellement réalisée dans un matériau constitué d'au moins un polymère choisi parmi un polymère acrylique ou maléique et une polyoléfine telle que notamment un homopolymère de l'éthylène ou du propylène, un copolymère d'éthylène et de propylène ou un mélange de ceux-ci.

Egalement de préférence, les moyens d'emballage (ou enveloppe) sont constitués d'une structure multicouches comprenant au moins une couche de support, par exemple en aluminium, munie d'une première face solidarisée à une couche externe de protection, par exemple constituée d'un matériau de type vernis acrylique ou en polytéréphtalate d'éthylène (ou PET). Cette structure multicouches peut également comporter une couche interne, solidarisée à une seconde face de la couche de support, et par exemple réalisée dans un matériau constitué d'au moins un polymère choisi parmi une polyoléfine telle que notamment un homopolymère de l'éthylène ou du propylène, un copolymère d'éthylène et de propylène ou un mélange de ceux-ci, voire même un polymère acrylique.

Les moyens d'emballage peuvent être éventuellement flexibles de sorte que le générateur électrochimique puisse être implanté sur un équipement susceptible de subir des contraintes telles que des flexions ou torsions bidirectionnelles.

Selon une autre caractéristique de l'invention, chaque seconde partie est solidarisée à un matériau actif propre à être imprégné d'un électrolyte non-aqueux porté, par exemple, par une membrane logée dans l'enveloppe.

L'invention concerne également une batterie comportant au moins un générateur électrochimique du type de celui présenté ci-avant.

L'invention est particulièrement bien adaptée à l'alimentation de composant(s) et/ou circuit(s) électronique(s), notamment lorsqu'il(s) sont (est) implanté(s) sur une carte à puce.

D'autres caractéristiques et avantages de l'invention apparaîtront à l'examen de la description détaillée ci-après, et des dessins annexés, sur lesquels :
- la figure 1 illustre de façon schématique, dans une vue de côté, un exemple de réalisation d'une batterie selon l'invention, et
- la figure 2 est une vue en coupe transversale selon l'axe II-II de la figure 1.

Les dessins annexés pourront non seulement servir à compléter l'invention, mais aussi contribuer à sa définition, le cas échéant.

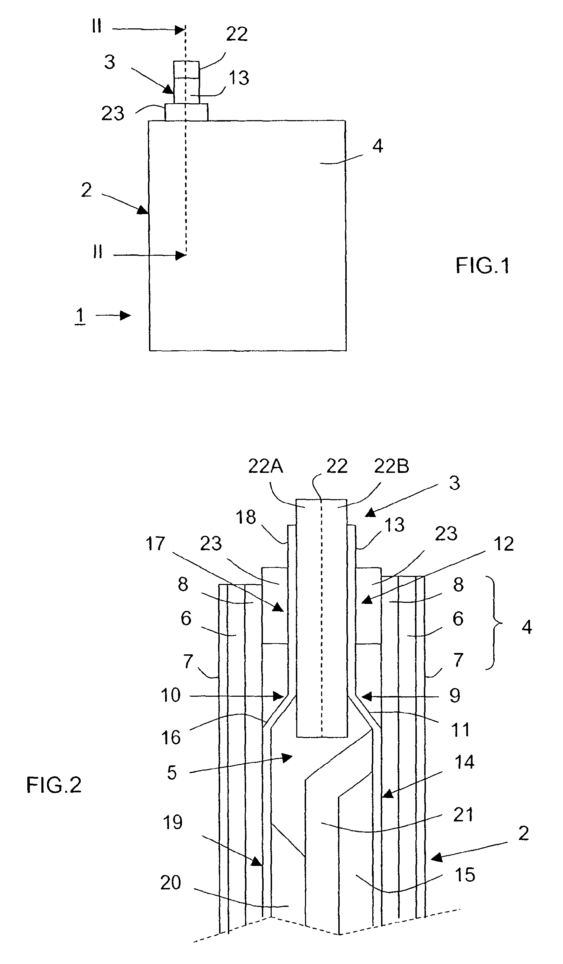

Sur les figures 1 et 2 se trouve illustré un exemple de réalisation d'une batterie 1 équipée d'un unique générateur électrochimique selon l'invention. Par conséquent, dans ce qui suit on assimilera la batterie 1 à son générateur électrochimique. Bien entendu, la batterie 1 pourrait comporter plusieurs générateurs électrochimiques montés en série ou en parallèle.

Dans l'exemple illustré sur la figure 1, la batterie 1 présente une partie principale 2 de forme rectangulaire, adaptée à son intégration dans un équipement de type carte à puce, et de laquelle fait saillie une patte de connexion monobloc 3. Par exemple, les longueur, largeur et épaisseur de la partie principale 2 sont respectivement de l'ordre de 35mm, 20mm et 0,5mm. Mais la partie principale 2 peut prendre de nombreuses autres formes et dimensions selon le lieu d'implantation de la batterie1.

Comme cela est mieux illustré sur la figure 2, la partie principale 2 de la batterie 1 comporte des moyens d'emballage 4 qui constituent une enveloppe définissant un espace interne 5. Cette enveloppe 4 est de préférence réalisée sous la forme d'une structure multicouches comportant au moins une couche de support 6 dont une première face (externe) est solidarisée à une couche externe de protection 7.

Par exemple, la couche de support 6 est réalisée dans un feuillard d'aluminium et la couche externe 7 est un vernis acrylique ou en polytéréphtalate d'éthylène (PET).

Comme illustré, l'enveloppe 4 peut également comporter une couche interne 8 solidarisée à une seconde face (interne) de la couche de support 6. Cette couche interne 8 est par exemple constituée d'un matériau qui est au moins un polymère choisi parmi une polyoléfine telle que notamment un homopolymère de l'éthylène ou du propylène, un copolymère d'éthylène et de propylène ou un mélange de ceux-ci, voire même un polymère acrylique. Il pourra notamment s'agir de polypropylène, de polyéthylène ou d'un copolymère d'éthylène et de propylène.

Les matériaux précités, qui constituent l'enveloppe 4, sont adaptés à l'exemple d'utilisation de la batterie 1, qui requiert de la flexibilité (ou souplesse). Par conséquent, ils ne sont en aucune façon limitatifs et pourront différer, de façon radicale, selon les besoins.

L'espace interne 5, défini par l'enveloppe 4, loge tout d'abord une partie d'une électrode négative 9 et une partie d'une électrode positive 10. L'électrode négative 9 est constituée d'une plaque métallique 11 définissant un collecteur de courant comprenant une première partie 12, définissant une borne de connexion 13, prolongée par une seconde partie 14 solidarisée à un matériau actif 15. Par exemple, la plaque métallique 11 est réalisée en cuivre.

De même, l'électrode positive 10 est constituée d'une plaque métallique 16 définissant un collecteur de courant comprenant une première partie 17, définissant une borne de connexion 18, prolongée par une seconde partie 19 solidarisée à un matériau actif 20. Par exemple, la plaque métallique 16 est réalisée en aluminium.

Par exemple, dans le cas d'un générateur secondaire (ou rechargeable) au lithium, le matériau actif 15, logé dans la partie interne 5 de l'enveloppe 4 et solidarisé à la seconde partie 14 de l'électrode négative 9, est une pâte contenant un matériau carboné apte à insérer des atomes de lithium, tel que le LiC₆, et le matériau actif 20, logé dans la partie interne 5 de l'enveloppe 4 et solidarisé à la seconde partie 19 de l'électrode positive 10, est une pâte contenant un oxyde métallique comprenant des atomes de lithium, tel que le LiCoO₂.

L'enveloppe 4 loge également dans sa partie interne 5 une membrane 21 séparant les matériaux actifs 15 et 20 et placée au contact de ceux-ci de manière à les alimenter en électrolyte. Par exemple, dans l'exemple précité de générateur au lithium, la membrane 21 est pourvue d'un électrolyte constitué d'un sel de lithium, tel que LiPF₆, en solution dans un solvant organique.

Au lieu de réaliser un générateur électrochimique secondaire (ou rechargeable) non-aqueux de type lithium-ion (Li-ion), on pourrait réaliser un générateur électrochimique primaire non-aqueux au lithium métal.

Le générateur électrochimique 1 comporte également une couche d'isolation électrique 22 comportant deux faces externes, ici sensiblement parallèles entre-elles, et auxquelles sont respectivement solidarisées les portions des premières parties 12 et 17, des électrodes négative 9 et positive 10, qui définissent les bornes de connexion négative 13 et positive 18.

Comme cela est matérialisé sur la figure 2 par la ligne en pointillés, la couche d'isolation 22 peut être éventuellement constituée de deux sous-couches 22A et 22B.

Par exemple, la couche d'isolation 22 (ou les sous-couches 22A et 22B) est (sont) réalisée(s) dans un matériau constitué d'au moins un polymère choisi parmi un polymère acrylique ou maléique et une polyoléfine telle que notamment un homopolymère de l'éthylène ou du propylène, un copolymère d'éthylène et de propylène ou un mélange de ceux-ci. Il pourra notamment s'agir de polypropylène, de polyéthylène ou d'un copolymère d'éthylène et de propylène modifiés par greffage de fonctions carboxyliques.

Les bornes de connexion 13 et 18, ainsi placées de part et d'autre de la couche d'isolation électrique 22, définissent avec celle-ci la patte de connexion monobloc 3. Une partie « inférieure » de cette patte de connexion 3 est logée dans la partie interne 5 de l'enveloppe 4, tandis qu'une partie « supérieure » de ladite patte de connexion fait saillie hors de ladite enveloppe 4 de manière à permettre le raccordement des deux bornes de connexion 13 et 18 à des composants et/ou circuits électroniques implantés sur un équipement.

Cette constitution monobloc renforce notablement la solidité des deux bornes de connexion et permet de simplifier sensiblement le procédé de fabrication du générateur électrochimique selon l'invention tout en réduisant les contraintes d'alignement des bornes de connexion. En outre, le fait de ne plus avoir qu'une unique traversée de l'enveloppe 4, contrairement aux deux traversées des générateurs de l'art antérieur, permet d'améliorer sensiblement l'étanchéité à l'intérieur de cette enveloppe.

Dans l'exemple illustré sur la figure 1, la patte de connexion 3 présente une faible extension latérale (définie par la direction perpendiculaire à l'axe II-II) par rapport à celle de la partie centrale 2. En d'autres termes, la portion de la première partie 12 ou 17, qui définit une borne de connexion 13 ou 18, est découpée. Mais, il pourrait en être autrement si cela s'avérait nécessaire. Par ailleurs, dans cet exemple les bornes de connexion 13 et 18 ne débordent pas de la couche d'isolation 22. Mais, on pourrait envisager que l'une au moins des bornes de connexion 13 et 18 déborde localement et très légèrement de la couche d'isolation 22. En outre, dans cet exemple les bornes de connexion 13 et 18 présentent une même extension longitudinale (définie par la direction parallèle à l'axe II-II). Mais, il pourrait en être autrement si cela s'avérait nécessaire.

Afin de renforcer l'isolation électrique et la protection des bornes de connexion 13 et 18, tout en renforçant l'étanchéité au niveau de la traversée de l'enveloppe 4, on peut également prévoir une ou deux couches auxiliaires d'isolation 23 interposée(s) entre l'enveloppe et la patte de connexion 3. Une seule couche auxiliaire 23 peut suffire, si elle est isolante électriquement. Dans ce cas elle peut en effet être réalisée sous la forme d'un manchon entourant complètement la patte de connexion 3 au niveau de la traversée. Lorsque l'on utilise deux couches auxiliaires, il n'est plus nécessaire, bien que cela reste préférable, qu'elles soient isolantes électriquement. Dans ce cas, elles peuvent par exemple se présenter sous la forme de parallélépipèdes (ou « patchs »).

Par exemple, la couche auxiliaire d'isolation 23 (ou les deux couches) est (sont) réalisée(s) dans un matériau adhérent constitué d'au moins un polymère choisi parmi un polymère acrylique ou maléique et une polyoléfine telle que notamment un homopolymère de l'éthylène ou du propylène, un copolymère d'éthylène et de propylène ou un mélange de ceux-ci. Il pourra notamment s'agir de polypropylène, de polyéthylène ou d'un copolymère d'éthylène et de propylène modifiés par greffage de fonctions carboxyliques.

Grâce à la superposition des deux bornes de connexion, avec interposition d'un matériau isolant, il est possible de réduire notablement, typiquement d'un facteur dix, le nombre de bornes de connexion cassées pendant les phases de fabrication et de test. Cela résulte principalement du fait que grâce à l'invention, les efforts de compression, mais surtout les efforts de torsion, subis par les bornes de connexion superposées, sont notablement réduits.

De plus cela permet d'améliorer notablement la qualité de l'étanchéité. Il a en effet été constaté que l'eau pénétrait environ 50% moins vite dans le générateur électrochimique, permettant ainsi d'envisager une augmentation notable, proche du doublement, de la durée de vie dans des conditions normales d'utilisation.

En outre, le fait de ne plus avoir qu'une seule zone par laquelle circule le courant, au lieu de deux, permet de simplifier le contrôle de l'opération délicate que constitue le scellement de la traversée des connexions.

L'invention ne se limite pas aux modes de réalisation de générateur électrochimique et de batterie décrits ci-avant, seulement à titre d'exemple, mais elle englobe toutes les variantes que pourra envisager l'homme de l'art dans le cadre des revendications ci-après.

Ainsi, on a décrit un générateur électrochimique de type secondaire (ou rechargeable), par exemple non-aqueux (Li-ion). Mais, l'invention n'est pas limitée à ce type de générateur électrochimique. Il pourrait notamment s'agir d'un autre type de générateur électrochimique secondaire à électrolyte non-aqueux et fonctionnant de préférence sans pression interne, voire même d'un générateur électrochimique primaire (comme par exemple une pile au lithium).

Par ailleurs, on a décrit un générateur électrochimique de forme parallélépipédique de faible épaisseur. Mais, l'invention n'est pas limitée à ce mode de réalisation de générateur électrochimique.

De plus, on a décrit une batterie comportant un unique générateur électrochimique. Mais la batterie selon l'invention n'est pas limitée à ce cas particulier.

## Revendications

1. Générateur électrochimique, **caractérisé en ce qu'**il comprend i) une électrode négative (9) et une électrode positive (10) comportant chacune un collecteur de courant (11,16) recouvert d'un matériau actif (15,20) et muni d'un prolongement définissant une borne de connexion, et ii) des moyens d'emballage (4) logeant à étanchéité lesdites électrodes (9,10), **caractérisé en ce que** lesdites bornes de connexion (13,18) sont placées de part et d'autre d'une couche d'isolation électrique (22) et définissent avec celle-ci une patte de connexion monobloc (3), et **en ce que** ladite patte de connexion monobloc (3) traverse ledit moyen d'emballage (4) de manière à saillir au moins en partie vers l'extérieur.

2. Générateur selon la revendication 1, **caractérisé en ce qu'**il comprend une couche auxiliaire d'isolation (23) placée entre lesdits moyens d'emballage (4) et ladite patte de connexion (3).

3. Générateur selon la revendication 2, **caractérisé en ce que** ladite couche auxiliaire d'isolation (23) est constituée d'un matériau comprenant au moins un polymère choisi parmi un polymère acrylique, un polymère maléique et une polyoléfine, et en particulier un homopolymère de l'éthylène et/ou un homopolymère du propylène et/ou un copolymère d'éthylène et de propylène ou un mélange de ceux-ci.

4. Générateur selon l'une des revendications 1 à 3, **caractérisé en ce que** ladite couche d'isolation électrique (22) est constituée de deux sous-couches (22A,22B).

5. Générateur selon l'une des revendications 1 à 4, **caractérisé en ce que** ladite couche d'isolation électrique (22) est constituée d'un matériau comprenant au moins un polymère choisi parmi un polymère acrylique, un polymère maléique et une polyoléfine, et en particulier un homopolymère de l'éthylène et/ou un homopolymère du propylène et/ou un copolymère d'éthylène et de propylène ou un mélange de ceux-ci.

6. Générateur selon l'une des revendications 1 à 5, **caractérisé en ce que** lesdits moyens d'emballage (4) sont constitués d'une structure multicouches comprenant au moins une couche de support (6) munie d'une première face solidarisée à une couche externe de protection (7).

7. Générateur selon la revendication 6, **caractérisé en ce que** ladite couche de support (6) est en aluminium.

8. Générateur selon l'une des revendications 6 et 7, **caractérisé en ce que** ladite couche externe (7) est constituée d'un matériau choisi dans un groupe comprenant au moins un vernis de protection et une couche de polytéréphtalate d'éthylène (PET).

9. Générateur selon l'une des revendications 6 à 8, **caractérisé en que** ladite structure multicouches (4) comporte une couche interne (8) solidarisée à une seconde face de la couche de support (6).

10. Générateur selon la revendication 9, **caractérisé en ce que** ladite couche interne (8) est constituée d'un matériau comprenant au moins un polymère choisi parmi un polymère acrylique et une polyoléfine, et en particulier un homopolymère de l'éthylène et/ou un homopolymère du propylène et/ou un copolymère d'éthylène et de propylène ou un mélange de ceux-ci.

11. Générateur selon l'une des revendications 1 à 10, **caractérisé en que** lesdits moyens d'emballage (4) sont flexibles.

12. Générateur selon l'une des revendications 1 à 11, **caractérisé en ce que** chaque seconde partie (14,19) est solidarisée à un matériau actif (15,20) propre à être imprégné d'un électrolyte non-aqueux.

13. Générateur selon la revendication 12, **caractérisé en ce qu'**il comprend une membrane (21) logée par lesdits moyens d'emballage (4), au contact de chaque matériau actif (15,20) et comprenant ledit électrolyte non-aqueux.

14. Générateur selon l'une des revendications 1 à 13, **caractérisé en ce qu'**il est de type rechargeable.

15. Batterie, **caractérisée en ce qu'**elle comprend au moins un générateur électrochimique selon l'une des revendications précédentes.

16. Utilisation du générateur électrochimique et de la batterie selon l'une des revendications précédentes pour l'alimentation de composants et/ou circuits électroniques.

17. Utilisation selon la revendication 16, **caractérisée en ce que** lesdits composants et/ou circuits électroniques sont implantés sur des cartes à puce.

## Claims

1. An electrochemical cell **characterized in that** it comprises i) a negative electrode (9) and a positive electrode (10), each comprising a current collector (11, 16) covered in an active material (15, 20) and provided with an extension defining a connection terminal, and ii) packaging means (4) housing said electrodes (9, 10) in leaktight manner, the cell being **characterized in that** said connection terminals (13, 18) are placed on either side of an electrically insulating layer (22) and co-operate therewith to define a single connection tab (3), and **in that** said single connection tab (3) passes through said packaging means in such a manner as to project outwards, at least in part.

2. A cell according to claim 1, **characterized in that** it includes an insulating auxiliary layer (23) placed between said packaging means (4) and said connection tab (3).

3. A cell according to claim 2, **characterized in that** said insulating auxiliary layer (23) is constituted by a material comprising at least one polymer selected from acrylic polymer, a maleic polymer, and a polyolefin, and in particular a homopolymer of ethylene, and/or a homopolymer of propylene, and/or a copolymer of ethylene and propylene, or a mixture thereof.

4. A cell according to one of claims 1 to 3, **characterized in that** said electrically insulating layer (22) is constituted by two sublayers (22A, 228).

5. A cell according to one of claims 1 to 4, **characterized in that** said electrically insulating layer (22) is constituted by a material comprising at least one polymer selected from an acrylic polymer, a maleic polymer, and a polyolefin, and in particular a homopolymer of ethylene, and/or a homopolymer of propylene, and/or a copolymer of ethylene and propylene, or a mixture thereof.

6. A cell according to one of claims 1 to 5, **characterized in that** said packaging means (4) are constituted by a multilayer structure comprising at least one support layer (6) provided with a first face secured to an outer protective layer (7).

7. A cell according to claim 6, **characterized in that** said support layer (6) is made of aluminum.

8. A cell according to one of claims 6 and 7, **characterized in that** said outer layer (7) is made of a material selected from a group comprising at least a protective varnish and a layer of polyethylene terephthalate (PET).

9. A cell according to one of claims 6 to 8, **characterized in that** said multilayer structure (4) includes an inner layer secured to a second face of the support layer.

10. A cell according to claim 9, **characterized in that** said inner layer (8) is made of a material comprising at least one polymer selected from an acrylic polymer, and a polyolefin, and in particular a homopolymer of ethylene, and/or a homopolymer of propylene, and/or a copolymer of ethylene and propylene, or a mixture thereof.

11. A cell according to one of claims 1 to 10, **characterized in that** said packaging means (4) are flexible.

12. A cell according to one of claims 1 to 11, **characterized in that** each second portion (14, 19) is secured to an active material (15, 20) suitable for being impregnated with a non-aqueous electrolyte.

13. A cell according to claim 12, **characterized in that** it includes a membrane (21) housed in said packaging means (4), in contact with each of the active materials 15, 20), and including said non-aqueous electrolyte.

14. A cell according to one of claims 1 to 13, **characterized in that** it is of the rechargeable type.

15. A battery, **characterized in that** it comprises at least one electrochemical cell according to claim 1.

16. The use of an electrochemical cell and a battery according to one of the preceding claims for powering electronic components and/or circuits.

17. The use according to claim 16, **characterized in that** said electronic components and/or circuits are implanted in a smart card.

## Patentansprüche

1. Elektrochemischer Generator, **dadurch gekennzeichnet, daß** er aufweist:
i) eine Negativelektrode (9) und eine Positivelektrode (10), die jeweils einen Stromabnehmer (11, 16) aufweisen, der mit einem aktiven Material (15, 20) überzogen ist und mit einer Verlängerung ausgestattet ist, die einen Verbindungsanschluß definiert, und ii) Verpackungsmitteln (4), die die Elektroden (9, 10) dicht einfassen, **dadurch gekennzeichnet, daß** die Verbindungsanschlüsse (13, 18) auf der einen bzw. der anderen Seite einer elektrischen Isolierschicht (22) angeordnet sind und mit dieser eine einzige Verbindungslasche (3) bilden, und daß die einzelne Verbindungslasche (3) die Verpackungsmittel (4) derart durchsetzt, daß sie zumindest teilweise nach außen wegsteht.

2. Generator nach Anspruch 1, **dadurch gekennzeichnet, daß** er eine Hilfsisolierschicht (23) aufweist, die zwischen den Verpackungsmitteln (4) und der Anschlußlasche (3) angeordnet ist.

3. Generator nach Anspruch 2, **dadurch gekennzeichnet, daß** die Hilfsisolierschicht (23) aus einem Werkstoff besteht, der zumindest ein Polymer aufweist, welches ausgewählt ist aus Acrylpolymer, Maleinpolymer und einem Polyolefin, und insbesondere einem Homopolymer von Ethylen und/oder einem Homopolymer von Polypropylen und/oder einem Copolymer von Ethylen und Propylen, oder einem Gemisch daraus.

4. Generator nach einem der Ansprüche 1 bis 3, **dadurch gekennzeichnet, daß** die elektrische Isolierschicht (22) aus zwei Teilschichten (22A, 22B) besteht.

5. Generator nach einem der Ansprüche 1 bis 4, **dadurch gekennzeichnet, daß** die elektrische Isolierschicht (22) aus einem Werkstoff besteht, der zumindest ein Polymer enthält, ausgewählt aus Acrylpolymer, Maleinpolymer und einem Polyolefin, insbesondere einem Homopolymer von Ethylen und/oder einem Homopolymer von Propylen und/oder einem Copolymer von Ethylen und Propylen oder einem Gemisch aus diesen.

6. Generator nach einem der Ansprüche 1 bis 5, **dadurch gekennzeichnet, daß** die Verpackungsmittel (4) gebildet sind durch eine mehrlagige Struktur, welche mindestens eine Trägerschicht (6) enthält, von der eine erste Seite an einer äußeren Schutzschicht angebracht ist.

7. Generator nach Anspruch 6, **dadurch gekennzeichnet, daß** die Trägerschicht (6) aus Aluminium besteht.

8. Generator nach einem der Ansprüche 6 und 7, **dadurch gekennzeichnet, daß** die äußere Schicht (7) aus einem Material gebildet ist, welches ausgewählt ist aus einer Gruppe, die mindestens einen Schutzlack und eine Schicht aus Polyethylenterephthalat (PET) umfaßt.

9. Generator nach einem der Ansprüche 6 bis 8, **dadurch gekennzeichnet, daß** die mehrlagige Struktur (4) eine Innenschicht (8) aufweist, die mit einer zweiten Seite der Trägerschicht (6) vereint ist.

10. Generator nach Anspruch 9, **dadurch gekennzeichnet, daß** die innere Schicht (8) gebildet wird aus einem Werkstoff, der mindestens ein Polymer aufweist, ausgewählt aus Acrylpolymer und einem Polyolefin, insbesondere einem Homopolymer von Ethylen und/oder einem Homopolymer von Propylen und/oder einem Copolymer von Ethylen und Propylen, oder einem Gemisch aus diesen.

11. Generator nach einem der Ansprüche 1 bis 10, **dadurch gekennzeichnet, daß** die Verpackungsmittel (4) flexibel sind.

12. Generator nach einem der Ansprüche 1 bis 11, **dadurch gekennzeichnet, daß** jeder zweite Teil (14, 19) mit einem aktiven Material zusammenhängt, welches dazu ausgebildet ist, mit einem nicht-wässrigen Elektrolyten imprägniert zu werden.

13. Generator nach Anspruch 12, **dadurch gekennzeichnet, daß** er eine Membran (21) enthält, angeordnet in den Verpackungsmitteln (4), mit jedem aktiven Material (15, 20) in Berührung stehend, und das nicht-wässrige Elektrolyt enthaltend.

14. Generator nach einem der Ansprüche 1 bis 13, **dadurch gekennzeichnet, daß** er vom wiederaufladbaren Typ ist.

15. Batterie, **dadurch gekennzeichnet, daß** sie mindestens einen elektrochemischen Generator nach einem der vorhergehenden Ansprüche enthält.

16. Verwendung des elektrochemischen Generators und der Batterie nach einem der vorhergehenden Ansprüche zum Versorgen von Bauteilen und/oder elektronischen Schaltungen.

17. Verwendung nach Anspruch 16, **dadurch gekennzeichnet, daß** die Bauteile und/oder elektronischen Schaltungen auf Mikrochipkarten angebracht sind.
